# EUROPEAN PATENT APPLICATION

(11) **EP 4 769 650 A1**
(43) Date of publication of application: **01.07.2026**
(21) Application number: 24954598.9
(22) Date of filing: 13.12.2024
(51) Int. Cl.: H01M 10/613, H01M 10/6556, H01M 10/6568, H01M 50/507

(54) **BATTERY PACK**

(30) Priority: 09.10.2024 CN 202422438277 U
(71) Applicant: Eve Energy Co., Ltd, Huizhou, Guangdong 516006 (CN)
(72) Inventor: HUANG, Liansheng, Huizhou, Guangdong 516006 (CN); LI, Xingyao, Huizhou, Guangdong 516006 (CN); YAN, Shiwei, Huizhou, Guangdong 516006 (CN); TANG, Jing, Huizhou, Guangdong 516006 (CN)
(74) Representative: Nederlandsch Octrooibureau
(86) International application number: PCT/CN2024/139010
(87) International publication number: WO 2026/076813

(57) **Abstract**

The application provides a battery pack, which includes at least one battery module (1), an integrated busbar (2) and a first liquid cooling plate (3). The battery module (1) includes a plurality of batteries (11), and the output terminals (110) of the plurality of batteries (11) are located on a same side of the battery module (1). The integrated busbar (2) includes at least one connector (211) connecting the output terminals (110) of two adjacent batteries (11) in the battery module (1). The first liquid cooling plate (3) is arranged on a side of the connector (211) away from the battery module (1). A first liquid cooling channel (31) is arranged in the first liquid cooling plate (2), and the first liquid cooling channel (31) is arranged opposite to the connector (211).

## Description

This application claims the priority to and benefit of Chinese Patent Application No. 202422438277.4, filed with China Patent Office on October 9, 2024, the entire contents of which is incorporated herein by reference.

### TECHNICAL FIELD

The present application relates to the technical field of batteries, and in particular to a battery pack.

### BACKGROUND

In the related art, when the battery pack is in a fast charging condition, the aluminum bars connecting the batteries in the battery pack generate severe heat. In the technical field of batteries, the liquid cooling plate for dissipating heat and cooling the battery pack is usually provided at the bottom of the battery pack.

### SUMMARY

In this configuration, the liquid cooling plate at the bottom of the battery pack cannot effectively dissipate heat and cool the aluminum bars.

In a first aspect, the present application provides a battery pack, including:
at least one battery module, each comprising a plurality of batteries, wherein output terminals of the plurality of batteries are located on a same side of the battery module;
an integrated busbar, comprising at least one connector connecting the output terminals of adjacent two of the plurality of batteries in the battery module; and
a first liquid cooling plate arranged on a side of the connector away from the battery module;
wherein a first liquid cooling channel is arranged in the first liquid cooling plate, and the first liquid cooling channel is arranged opposite to the connector.

### BENEFICIAL EFFECTS

In the battery pack according to the present application, a first liquid cooling plate is arranged opposite to the output terminals of the batteries in the battery pack, so that the first liquid cooling channel in the first liquid cooling plate can dissipate heat for the connector connected to the output terminals of the batteries, and when the battery pack is in a fast charging condition, the heat dissipation and cooling of the connector can be achieved, thereby reducing the impact of the heat generation of the connector on the battery pack.

### BRIEF DESCRIPTION OF THE DRAWINGS

FIG. 1 is a perspective schematic diagram of a battery pack according to an embodiment of the present application.
FIG. 2 is a perspective schematic diagram of battery modules according to an embodiment of the present application.
FIG. 3 is a cross-sectional view of a first liquid cooling plate according to an embodiment of the present application.
FIG. 4 is another perspective schematic diagram of a battery pack according to an embodiment of the present application.
FIG. 5 is another perspective schematic diagram of a battery pack according to an embodiment of the present application.
FIG. 6 is a cross-sectional view of a second liquid cooling plate according to an embodiment of the present application.
FIG. 7 is a cross-sectional view of a third liquid cooling plate according to an embodiment of the present application.
FIG. 8 is an exploded view of a battery pack according to an embodiment of the present application.

List of reference numerals:

1, battery module; 11, battery; 110, output terminal; 111, pressure relief valve; 2, integrated busbar; 21, connector group; 211, connector; 3, first liquid cooling plate; 31, first liquid cooling channel; 32, first liquid inlet end; 33, first liquid outlet end; 311, first channel; 3111, first sub-channel; 3112, second sub-channel; 4, second liquid cooling plate; 41, second liquid cooling channel; 411, third sub-channel; 42, second liquid inlet end; 43, second liquid outlet end; 5, third liquid cooling plate; 501, liquid cooling plate body; 502, sealing portion; 503, connecting portion; 51, third liquid cooling channel; 511, liquid inlet channel; 5111, liquid inlet sub-channel; 512, liquid outlet channel; 5121, liquid outlet sub-channel; 513, first cavity; 514, second cavity; 515, third cavity; 52, third liquid inlet end; 53, third liquid outlet end; 6, slot; 7, liquid inlet pipe section; 8, liquid outlet pipe section; 9, cover plate; 10, bottom plate; 12, side plate; 13, end plate; 14, heat preservation member.

### DETAILED DESCRIPTION OF THE EMBODIMENTS

In the description of this application, unless otherwise clearly specified and limited, the terms "connected", "coupled", and "fixed" should be understood in a broad sense, for example, it can be a fixed connection, a detachable connection, or an integral connection; it can be a mechanical connection or an electrical connection; it can be a direct connection or an indirect connection through an intermediate medium, it can be the internal connection of two elements or the interaction relationship between two elements. For ordinary technicians in this field, the specific meanings of the above terms in this application can be understood according to the specific circumstances.

In the present application, unless otherwise clearly specified and limited, a first feature being "above" or "below" a second feature may include the first and second features being in direct contact, or may include the first and second features being in contact not directly but through another feature between them. Moreover, a first feature being "above", "on" and "over" a second feature includes the first feature being directly above and obliquely above the second feature, and the first feature having a higher horizontal height than the second feature. A first feature being "below", "under" and "beneath" a second feature includes the first feature being directly below and obliquely below the second feature, and the first feature having a lower horizontal height than the second feature.

In the description of this embodiment, the terms "upper", "lower", "left", "right", "front", "rear" and other directions or positional relationships are based on the directions or positional relationships shown in the drawings, and are for the convenience of description and simplification of operation, rather than indicating or implying that the device or element referred to must have a specific direction, be constructed and operate in a specific direction, and therefore cannot be understood as limiting the present application. In addition, the terms "first" and "second" are used to distinguish in the description and have no special meaning.

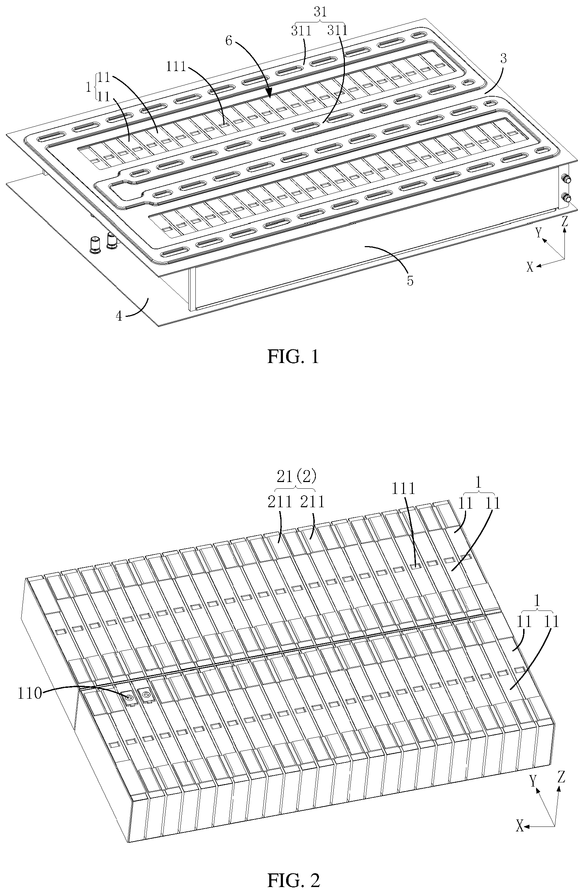

The present application proposes a battery pack, and FIGs. 1 to 8 shows some embodiments of the present application. As indicated by the direction markings in the drawings, the X direction in the drawings is the first direction, the Y direction is the third direction, and the Z direction is the second direction. The first direction intersects the second direction, and the first direction and the second direction are both perpendicular to the third direction. For ease of understanding, the first direction X, the second direction Z, and the third direction Y are described below.

Please refer to FIGs. 1 and 2. In some embodiments of the present application, the battery pack includes at least one battery module 1 and an integrated busbar 2. The battery module 1 includes a plurality of batteries 11. The output terminals 110 of the plurality of batteries 11 are located on a same side of the battery module 1. The integrated busbar 2 includes at least one connector 211. The connector 211 connects the output terminals 110 of two adjacent batteries 11 in the battery module 1. That is, in this embodiment, the connector 211 connects the output terminals 110 of two adjacent batteries 11 to achieve electrical connection between the two adjacent batteries 11. When the battery pack is in a fast charging condition, the connector 211 will generate severe heat.

In some embodiments of the present application, the battery pack includes a first liquid cooling plate 3, which is arranged on the side of the connector 211 away from the battery module 1; wherein a first liquid cooling channel 31 is arranged in the first liquid cooling plate 3, and the first liquid cooling channel 31 is arranged opposite to the connector 211; that is, the first liquid cooling channel 31 on the first liquid cooling plate 3 can dissipate heat and cool the connector 211.

In the technical solution of the present application, the first liquid cooling plate 3 is arranged opposite to the output terminals 110 of the batteries 11 in the battery pack, so that the first liquid cooling channel 31 located in the first liquid cooling plate 3 can dissipate heat for the connector 211 connected to the output terminals 110 of the batteries 11, and when the battery pack is in a fast charging condition, the connector 211 can be dissipated and cooled, thereby reducing the effect of the heat generated by the connector 211 on the battery pack.

The plurality of batteries 11 in the battery module 1 may be arranged in a single direction, such as the plurality of batteries 11 are arranged in a first direction X, or the plurality of batteries 11 are arranged in a third direction Y, and the like; or the plurality of batteries 11 are arranged in an array on a certain plane, such as the plurality of batteries 11 are arranged in an array on a plane where the first direction X and the third direction Y are located.

It should be noted that there is no restriction on the arrangement of the plurality of batteries 11 in the battery module 1, as long as the first liquid cooling channel 31 located on the first liquid cooling plate 3 is opposite to the connector 211 after being assembled with the battery module 1 and can dissipate heat and cool the connector 211.

The first liquid cooling channel 31 can dissipate heat and cool down the connector 211 as well as the battery 11.

In some embodiments of the present application, the plurality of batteries 11 located in one battery module 1 are arranged along the first direction X, and the output terminals 110 of the plurality of batteries 11 are all located on one side of the battery module 1 in a second direction Z; wherein each battery 11 includes two output terminals 110, one of the two output terminals 110 is a positive output terminal, and the other is a negative output terminal.

The integrated busbar 2 includes at least one connector group 21, each including a plurality of connectors 211 arranged along a first direction X. Each of the connectors 211 is located on one side of the battery module 1 in a second direction Z and connects the output terminals 110 of two adjacent batteries 11; that is, the connector 211 can connect the positive output terminals and the negative output terminals of two adjacent batteries 11.

It can be understood that although the plurality of batteries 11 are arranged in the first direction X, the two output terminals 110 on one battery 11 may be arranged at intervals in the first direction X, or may be arranged at intervals in the third direction Y. Referring to FIG. 2, in some embodiments of the present application, the two output terminals 110 on one battery 11 are arranged at intervals in the third direction Y.

In some embodiments of the present application, the first liquid cooling channel 31 includes at least one first channel 311, which extends along the first direction X and is arranged on the side of the connector group 21 away from the battery module 1; wherein the extension direction of the first channel 311 is the same as the arrangement direction of the plurality of batteries 11 in the battery module 1, so that the first channel 311 can simultaneously dissipate heat and cool down the plurality of connectors 211 connecting the plurality of batteries 11 in the battery module 1, thereby improving the heat dissipation efficiency of the first channel 311.

The first liquid cooling plate 3 is located at one side of the battery module 1 in the second direction Z.

Please refer to FIGs. 1 to 3. In some embodiments of the present application, the first channel 311 includes at least two first sub-channels 3111 extending along the first direction X, and the two adjacent first sub-channels 3111 are arranged at intervals in the third direction Y; this arrangement is due to the fact that the size of the connector 211 in the third direction Y is large, and the size of the first channel 311 in the third direction Y needs to match the size of the connector 211 in the third direction Y, thereby dissipating heat from the connector 211; the first channel 311 includes at least two first sub-channels 3111, which can enhance the structural strength of the first liquid cooling plate 3 to reduce the risk of the first liquid cooling plate 3 being concave and deformed at the first channel 311.

The number of the first sub-channels 3111 may be two, three or more, which is not limited here.

In addition, two adjacent first sub-channels 3111 in the third direction Y may be connected to each other or may not be connected to each other.

In some embodiments of the present application, the first channel 311 also includes at least one second sub-channel 3112, and the second sub-channel 3112 is arranged between two adjacent first sub-channels 3111 and communicating with the two adjacent first sub-channels 3111; such an arrangement increases the contact area between the first channel 311 and the connector 211 while ensuring the structural strength of the first liquid cooling plate 3, so as to increase the size of the first channel 311 and reduce the flow resistance of the coolant in the first channel 311, thereby improving the efficiency of heat dissipation and cooling of the connector 211.

In some embodiments of the present application, a first channel 311 includes two first sub-channels 3111, and a same side of the two first sub-channels 3111 in the first direction X is a liquid inlet side, and the other side of the two first sub-channels 3111 in the first direction X is a liquid outlet side; this arrangement facilitates the circulation of the cooling liquid in the first channel 311.

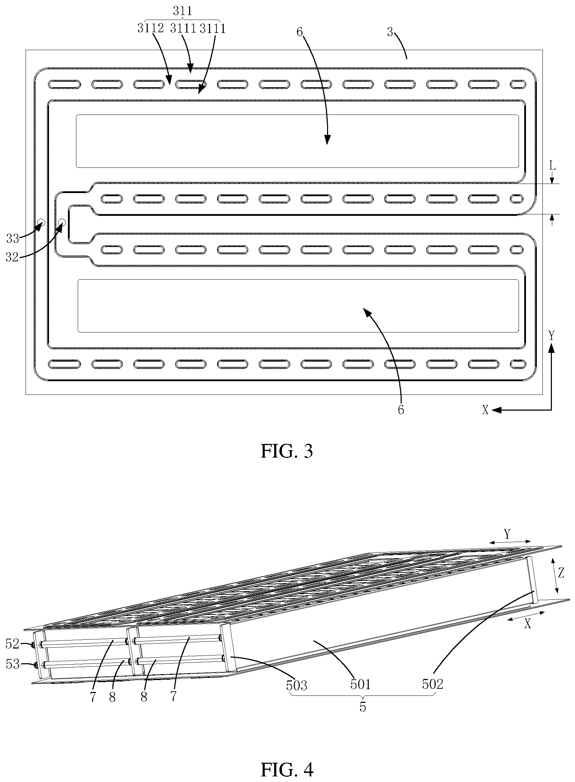

Please refer to FIG. 3. In some embodiments of the present application, the dimension (length) of the first channel 311 in the third direction Y is L; wherein L satisfies: 50 mm ≤ L ≤ 70 mm; setting the value of L to satisfy 50 mm ≤ L ≤ 70 mm can ensure the efficiency of the first channel 311 in cooling the connector 211. If the value of L is less than 50 mm, the first channel 311 may not completely cover the connector 211 in the third direction Y, resulting in poor efficiency of the first liquid cooling plate 3 in cooling the connector 211; if L is greater than 70 mm, the structural strength of the first liquid cooling plate 3 may be too weak.

The value of L may be 50 mm, 50.5 mm, 51 mm, 51.5 mm, 52 mm, 52.5 mm, 53 mm, 53.5 mm, 54 mm, 54.5 mm, 55 mm, 55.5 mm, 56 mm, 56.5 mm, 57 mm, 57.5 mm, 58 mm, 58.5 mm, 59 mm, 59.5 mm, 60 mm, 60.5 mm, 61 mm, 61.5 mm, 62 mm, 62.5 mm, 63 mm, 63.5 mm, 64 mm, 64.5 mm, 65 mm, 65.5 mm, 66 mm, 66.5 mm, 67 mm, 67.5 mm, 68 mm, 68.5 mm, 69 mm, 69.5 mm, 70 mm. The value of L is not limited to the listed values, and other values not listed within the numerical range are also applicable.

In some embodiments of the present application, the battery pack further includes a second liquid cooling plate 4, which is disposed on a side of the battery module 1 away from the first liquid cooling plate 3 in the second direction Z; that is, in this embodiment, based on the structural arrangement of the first liquid cooling plate 3 and the second liquid cooling plate 4, heat can be dissipated on both sides of the battery module 1 in the second direction Z at the same time, so as to avoid excessive temperature of the batteries 11 in the battery module 1 and excessive temperature of the connectors 211 during use of the battery pack.

It is understandable that, based on the embodiment in the present application where the battery pack includes the first liquid cooling plate 3 and the second liquid cooling plate 4, the first liquid cooling plate 3 and the second liquid cooling plate 4 may be in communication or not in communication with each other, which is not limited here.

In some embodiments of the present application, the battery pack further includes at least two third liquid cooling plates 5 extending along the first direction X, and the two third liquid cooling plates 5 are respectively arranged on both sides of the battery module 1 in the third direction Y. In this embodiment, based on the structural arrangement of the first liquid cooling plate 3 and the third liquid cooling plate 5, the heat can be dissipated on one side of the battery module 1 in the second direction Z and on both sides of the battery module 1 in the third direction Y at the same time, so as to avoid the temperature of the battery 11 in the battery module 1 being too high and the temperature of the connectors 211 being too high during use of the battery pack.

It is understandable that, based on the embodiment in the present application where the battery pack includes the first liquid cooling plate 3 and at least two third liquid cooling plates 5, the first liquid cooling plate 3 and the at least two third liquid cooling plates 5 may be not in communication with each other; or the first liquid cooling plate 3 and the at least two third liquid cooling plates 5 may partially be in communication with each other, such as the first liquid cooling plate 3 is in communication with one of the two third liquid cooling plates 5, or the two third liquid cooling plates 5 are in communication with each other and not in communication with the first liquid cooling plate 3; or the first liquid cooling plate 3 and the at least two third liquid cooling plates 5 are all in communication with each other. No limitation is made here.

In some embodiments of the present application, a plurality of battery modules 1 are provided, and the plurality of battery modules 1 are arranged in the third direction Y; wherein one battery module 1 is provided between two adjacent third liquid cooling plates 5; such an arrangement enables each battery module 1 to have two third liquid cooling plates 5 on both sides in the third direction Y to dissipate heat from the battery module 1, thereby improving the efficiency of heat dissipation and cooling of each battery module 1 in the battery pack.

Since there are a plurality of battery modules 1, a plurality of first liquid cooling channels 31 are arranged on the first liquid cooling plate 3, and the plurality of first liquid cooling channels 31 are arranged at intervals in the third direction Y to correspond to the connector group 21 in each battery module 1, thereby ensuring that the plurality of connectors 211 in the battery pack can all be cooled and dissipated.

In some embodiments of the present application, two adjacent first liquid cooling channels 31 are in communication with each other.

In some embodiments of the present application, the battery pack further includes a second liquid cooling plate 4 and at least two third liquid cooling plates 5, the second liquid cooling plate 4 is arranged on the side of the battery module 1 away from the first liquid cooling plate 3 in the second direction Z; the third liquid cooling plates 5 extend along the first direction X, and the two third liquid cooling plates 5 are respectively arranged on both sides of the battery module 1 in the third direction Y. In this embodiment, based on the structural arrangement of the first liquid cooling plate 3, the second liquid cooling plate 4 and the third liquid cooling plates 5, the heat can be dissipated on both sides of the battery module 1 in the second direction Z and on both sides in the third direction Y at the same time, so as to avoid the temperature of the batteries 11 in the battery module 1 being too high and the temperature of the connectors 211 being too high during use of the battery pack.

It can be understood that, based on the embodiment in the present application where the battery pack includes the first liquid cooling plate 3, the second liquid cooling plate 4 and at least two third liquid cooling plates 5, the first liquid cooling plate 3, the second liquid cooling plate 4 and the at least two third liquid cooling plates 5 may be not in communication with each other; or the first liquid cooling plate 3, the second liquid cooling plate 4 and the at least two third liquid cooling plates 5 may be partially in communication with each other, such as the first liquid cooling plate 3 is in communication with the second liquid cooling plate 4, or the two third liquid cooling plates 5 are in communication with each other and not in communication with the first liquid cooling plate 3 and the second liquid cooling plate 4; or the first liquid cooling plate 3, the second liquid cooling plate 4 and the at least two third liquid cooling plates 5 are all in communication with each other. No limitation is made here.

In some embodiments of the present application, a plurality of battery modules 1 are provided, and the plurality of battery modules 1 are arranged in a third direction Y; wherein a battery module 1 is provided between two adjacent third liquid cooling plates 5; such an arrangement enables a battery module 1 to have two third liquid cooling plates 5 on both sides in the third direction Y to dissipate heat from the battery module 1, thereby improving the efficiency of heat dissipation and cooling of each battery module 1 in the battery pack.

Since there are a plurality of battery modules 1, a plurality of first liquid cooling channels 31 are arranged on the first liquid cooling plate 3, and the plurality of first liquid cooling channels 31 are arranged at intervals in the third direction Y to correspond to the connector group 21 in each battery module 1, thereby ensuring that the plurality of connectors 211 in the battery pack can all be cooled and dissipated.

In some embodiments of the present application, two adjacent first liquid cooling channels 31 are communication with each other.

Please refer to FIG. 4. In some implementations of the present application, two adjacent third liquid cooling plates 5 are in communication with each other. With such an arrangement, a liquid inlet end and a liquid outlet end can be provided between the plurality of third liquid cooling plates 5 to complete the circulation of the coolant on the plurality of third liquid cooling plates 5, thereby reducing the number of components in the battery pack.

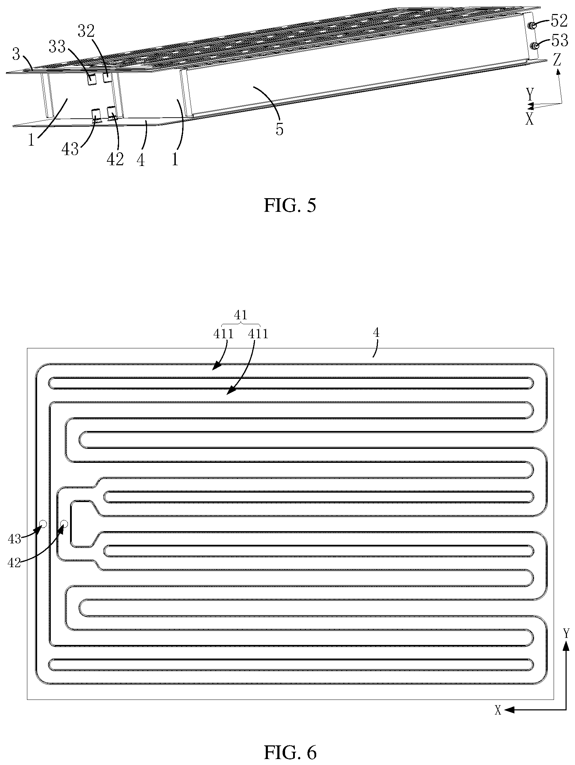

Please refer to FIG. 5. In some embodiments of the present application, the first liquid cooling plate 3 includes a first liquid inlet end 32 and a first liquid outlet end 33 both in communication with the first liquid cooling channel 31; a second liquid cooling channel 41 is arranged in the second liquid cooling plate 4, and the second liquid cooling plate 4 includes a second liquid inlet end 42 and a second liquid outlet end 43 both in communication with the second liquid cooling channel 41; wherein the first liquid inlet end 32, the first liquid outlet end 33, the second liquid inlet end 42 and the second liquid outlet end 43 are all located on a same side of the battery module 1 in the first direction X; such arrangement enables the pipelines connected to the first liquid inlet end 32, the first liquid outlet end 33, the second liquid inlet end 42 and the second liquid outlet end 43 to be located on the same side of the battery pack, so as to reduce the length of the pipelines connecting the first liquid inlet end 32, the first liquid outlet end 33, the second liquid inlet end 42 and the second liquid outlet end 43.

The positions of first liquid inlet end 32 and the first liquid outlet end 33 on the first liquid cooling plate 3 can be interchanged, and the positions of the second liquid inlet end 42 and the second liquid outlet end 43 on the second liquid cooling plate 4 can be interchanged.

The first liquid inlet end 32 and the first liquid outlet end 33 are both in communication with the plurality of first channels 311.

In some embodiments of the present application, a third liquid cooling channel 51 is provided in the third liquid cooling plate 5, and the third liquid cooling plate 5 includes a third liquid inlet end 52 and a third liquid outlet end 53 in communication with the third liquid cooling channel 51; the third liquid inlet end 52 and the third liquid outlet end 53 are located on the side of the battery module 1 away from the first liquid inlet end 32 in the first direction X; in this way, the first liquid inlet end 32 and the first liquid outlet end 23 of the first liquid cooling plate 3, and the second liquid inlet end 42 and the second liquid outlet end 43 of the second liquid cooling plate 4 are arranged opposite to the third liquid inlet end 52 and the third liquid outlet end 53 of the third liquid cooling plate 5 in the first direction X, thereby improving the temperature uniformity of the battery pack.

The positions of the third liquid inlet end 52 and the third liquid outlet end 53 on the third liquid cooling plate 5 may be interchanged.

In some embodiments of the present application, the battery 11 further includes a pressure relief valve 111, and the pressure relief valve 111 of the battery 11 and the output terminals 110 of the battery 11 are located on the same side of the battery 11; a slot 6 is disposed penetrating the first liquid cooling plate 3 at a position opposite to the pressure relief valves 111 of the batteries 11. In this embodiment, the slot 6 is provided to avoid the interference caused by the first liquid cooling plate 3 on the pressure relief of the battery 11, and the weight of the first liquid cooling plate 3 can be reduced.

Please refer to FIG. 6. In some embodiments of the present application, the second liquid cooling channel 41 includes a plurality of third sub-channels 411 spaced apart in the third direction Y, the third sub-channels 411 extend along the first direction X, and two adjacent third sub-channels 411 are connected to each other; wherein, the plurality of third sub-channels 411 are all in communication with the second liquid inlet end 42 and the second liquid outlet end 43 to realize the circulation of the coolant in the second liquid cooling plate 4, and the temperature difference between the plurality of batteries 11 can be effectively reduced.

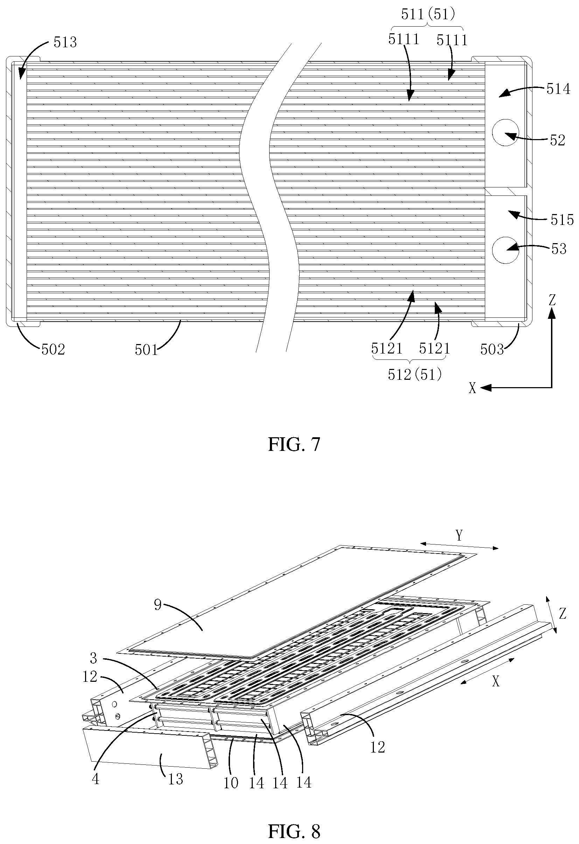

Please refer to FIG. 7. In some embodiments of the present application, the third liquid cooling channel 51 in the third liquid cooling plate 5 includes a liquid inlet channel 511 and a liquid outlet channel 512 arranged at intervals in the second direction Z, and a first cavity 513 in communication with the liquid inlet channel 511 and the liquid outlet channel 512. The liquid inlet channel 511 and the liquid outlet channel 512 both extend along the first direction X, and at least part of the positive projection of the liquid inlet channel 511 and the liquid outlet channel 512 in the third direction Y falls on the battery 11; that is, in this embodiment, the arrangement of the liquid inlet channel 511 and the liquid outlet channel 512 enables the coolant to flow through each battery 11 in the battery module 1 twice in succession, thereby improving the cooling effect on the plurality of batteries 11 of the battery module 1.

The third liquid inlet end 52 is in communication with the liquid inlet channel 511, and the third liquid outlet end 53 is in communication with the liquid outlet channel 512. In the third liquid cooling plate 5, the flow path of the coolant is from the third liquid inlet end 52, through the liquid inlet channel 511, through the first cavity 513, through the liquid outlet channel 512, to the third liquid outlet end 53.

It should be noted that there is no restriction on the specific channel forms of the liquid inlet channel 511 and the liquid outlet channel 512, and they may be formed by one channel or by multiple sub-channels. In one embodiment of the present application, the liquid inlet channel 511 includes a plurality of liquid inlet sub-channels 5111 arranged in parallel in the second direction Z, and the liquid outlet channel 512 includes a plurality of liquid outlet sub-channels 5121 arranged in parallel in the second direction Z. There is no restriction on the number of liquid inlet sub-channels 5111 and liquid outlet sub-channels 5121, and they may be adjusted according to the height of the third liquid cooling plate 5 in the second direction Z.

In some embodiments of the present application, the third liquid cooling plate 5 includes a liquid cooling plate body 501, a sealing portion 502 and a connecting portion 503. The liquid cooling plate body 501 extends along the first direction X. The sealing portion 502 and the connecting portion 503 are respectively arranged at opposite ends of the liquid cooling plate body 501 in the first direction X. The liquid inlet channel 511 and the liquid outlet channel 512 are arranged in the liquid cooling plate body 501. The first cavity 513 is arranged in the sealing portion 502. The connecting portion 503 is provided with a second cavity 514 and a third cavity 515 arranged at intervals. The second cavity 514 is in communication with the third liquid inlet end 52, and the third cavity 515 is in communication with the third liquid outlet end 53.

In some embodiments of the present application, the battery pack also includes a plurality of liquid inlet pipe sections 7 and a plurality of liquid outlet pipe sections 8. The liquid inlet pipe section 7 connects the third liquid inlet ends 52 of two adjacent third liquid cooling plates 5, and the liquid outlet pipe section 8 connects the third liquid outlet ends 53 of two adjacent third liquid cooling plates 5 to achieve communication between the plurality of third liquid cooling plates 5.

Please refer to FIG. 8. In some embodiments of the present application, a cover plate 9 is provided on the side of the first liquid cooling plate 3 facing away from the battery module 1, side plates 12 are provided on the side of the corresponding third liquid cooling plate 5 facing away from the battery module 1, a bottom plate 10 is provided on the side of the second liquid cooling plate 4 facing away from the battery module, and end plates 13 are provided on opposite sides of the battery module in the first direction X. The cover plate 9, the side plates 12, the bottom plate 10 and the end plates 13 are provided to protect the multiple batteries 11 in the battery pack.

In some embodiments of the present application, the battery pack further includes a heat preservation member 14, which can provide good heat preservation and heat insulation effects for the batteries 11. In one embodiment, the heat preservation member 14 is disposed on both sides of the battery module 1 in the first direction X. In another embodiment, the heat preservation member 14 is disposed between the second liquid cooling plate 4 and the bottom plate 10. In yet another embodiment, the heat preservation member 14 is disposed between the third liquid cooling plate 5 and the side plate 12.

The ones of the heat preservation members 14 arranged on both sides of the battery module 1 in the first direction X are plastic insulation sheets, the ones of the heat preservation members 14 arranged between the second liquid cooling plate 4 and the bottom plate 10 are foam, and the ones of the heat preservation members 14 arranged between the third liquid cooling plate 5 and the side plate 12 are foamed glue.

## Claims

1. A battery pack, comprising:
one or more battery modules (1), each comprising a plurality of batteries (11) having output terminals (110) located on a same side of the battery module (1);
an integrated busbar (2), comprising at least one connector (211) each connecting the output terminals (110) of any two adjacent ones of the plurality of batteries in each battery module (1); and
a first liquid cooling plate (3), arranged on a side of the at least one connector (211) away from the one or more battery modules (1);
wherein, a first liquid cooling channel (31) is arranged in the first liquid cooling plate (3) and opposite to the at least one connector (211).

2. The battery pack according to claim 1, wherein the plurality of batteries (11) in each of the one or more battery module (1) are arranged along a first direction, and the output terminals (110) of the plurality of batteries (11) are all located on a side of the battery module (1) in a second direction intersecting the first direction;
wherein the integrated busbar (2) comprises a connector group (21), the connector group (21) comprising the connectors (211) each arranged along the first direction, the connectors located on the side of the battery module (1) in the second direction and connecting the output terminals (110) of any two adjacent ones of the plurality of batteries (11);
wherein the first liquid cooling channel (31) comprises at least one first channel (311) extending along the first direction and arranged on a side of the connector group (21) away from the battery module (1).

3. The battery pack according to claim 2, wherein the at least one first channel (311) each comprises at least two first sub-channels (3111) extending along the first direction, and any two adjacent ones of the at least two first sub-channels (3111) are spaced apart in a third direction perpendicular to the first direction and the second direction.

4. The battery pack according to claim 3, wherein the at least one first channel (311) each further comprises at least one second sub-channel (3112) each arranged between and in communication with any two adjacent ones of the at least two first sub-channels (3111).

5. The battery pack according to claim 2, wherein the at least one first channel (311) each has a length L in a third direction perpendicular to the first direction and the second direction; wherein L satisfies: 50 mm ≤ L ≤ 70 mm.

6. The battery pack according to claim 2, further comprising a second liquid cooling plate (4) arranged on a side of the battery module (1) away from the first liquid cooling plate (3) in the second direction.

7. The battery pack according to claim 2, further comprising at least two third liquid cooling plates (5) extending along the first direction and respectively arranged on both sides of the battery module (1) in a third direction perpendicular to the first direction and the second direction.

8. The battery pack according to claim 7, wherein the battery modules (1) are arranged in the third direction;
one of the battery modules (1) is arranged between any two adjacent ones of the at least two third liquid cooling plates (5).

9. The battery pack according to claim 8, wherein any two adjacent ones of the at least two third liquid cooling plates (5) are in communication with each other.

10. The battery pack according to claim 2, further comprising:
a second liquid cooling plate (4) arranged on a side of the battery module (1) away from the first liquid cooling plate (3) in the second direction; and
at least two third liquid cooling plates (5) extending along the first direction and respectively arranged on both sides of the battery module (1) in the third direction perpendicular to the first direction and the second direction.

11. The battery pack according to claim 10, wherein the first liquid cooling plate (3) comprises a first liquid inlet end (32) and a first liquid outlet end (33) both in communication with the first liquid cooling channel (31);
wherein a second liquid cooling channel (41) is provided in the second liquid cooling plate (4), and the second liquid cooling plate (4) comprises a second liquid inlet end (42) and a second liquid outlet end (43) both in communication with the second liquid cooling channel (41);
wherein the first liquid inlet end (32), the first liquid outlet end (33), the second liquid inlet end (42) and the second liquid outlet end (43) are all located on a same side of the battery module (1) in the first direction.

12. The battery pack according to claim 11, wherein a third liquid cooling channel (51) is provided in each of the at least two third liquid cooling plates (5), and the third liquid cooling plate (5) comprises a third liquid inlet end (52) and a third liquid outlet end (53) both in communication with the third liquid cooling channel (51);
wherein the third liquid inlet end (52) and the third liquid outlet end (53) are located on a side of the battery module (1) away from the first liquid inlet end (32) in the first direction.

13. The battery pack according to any one of claims 1 to 12, wherein the plurality of batteries (11) each further comprises a pressure relief valve (111), and the pressure relief valve of the battery and the output terminal of the battery are located on a same side of the battery;
wherein a slot (6) is disposed penetrating the first liquid cooling plate (3) at a position opposite to the pressure relief valve (111) of the battery.
